# EUROPEAN PATENT APPLICATION

(11) **EP 4 484 797 A1**
(43) Date of publication of application: **01.01.2025**
(21) Application number: 22931646.8
(22) Date of filing: 30.06.2022
(51) Int. Cl.: F16H 1/28, F16H 57/02, F16H 57/021, F16H 57/023, F16H 57/08, F03D 15/00, F03D 80/00

(54) **GEAR SPEED CHANGE DEVICE, TRANSMISSION MECHANISM, AND WIND GENERATING SET**

(30) Priority: 15.03.2022 CN 202210253345
(71) Applicant: GOLDWIND SCIENCE & TECHNOLOGY CO., LTD., Xinjiang 830026 (CN)
(72) Inventor: AI, Xiaolan, Beijing 100176 (CN); GAO, Si, Beijing 100176 (CN); XU, Honglei, Beijing 100176 (CN); YANG, Yuliang, Beijing 100176 (CN)
(74) Representative: Gulde & Partner
(86) International application number: PCT/CN2022/102748
(87) International publication number: WO 2023/173623

(57) **Abstract**

A gear speed change device. The gear speed change device comprises a first planetary gear train (100). The first planetary gear train (100) comprises a first ring gear (101), a first planetary carrier (102), first planetary gears (103), a solar idle gear (104), and a planetary idle gear (105). The planetary idle gear (105) and the first planetary gears (103) are all mounted on the first planetary carrier (102); each first planetary gear (103) comprises a pinion (103a) and a large gear (103b) coaxially connected to the pinion (103a); the planetary idle gear (105) and the pinion (103a) are both engaged with the inside of the first ring gear (101) and are both engaged with the outside of the solar idle gear (104); the pinion (103a) can float along the radial direction thereof relative to the first planetary carrier (102), and the maximum radial floating amount of the pinion (103a) is greater than the maximum radial floating amount of the planetary idle gear (105); and the large gears (103b) of at least two first planetary gears (103) are arranged in a staggered manner in the axial direction, and projections thereof on a plane perpendicular to the axial direction overlap with each other. The gear speed change device has a relatively high torque load density, and can give consideration to a small volume, a large transmission speed ratio and a high torque load capability.

## Description

This application claims the priority of the Chinese Patent Application No. 202210253345.2, titled "GEAR BOX, TRANSMISSION MECHANISM, AND WIND TURBINE GENERATING SYSTEM", filed on March 15, 2022 with the China National Intellectual Property Administration, which is incorporated herein by reference in its entirety.

### FIELD

The present application relates to a gear box, which can be applied in a transmission mechanism of a wind turbine generating system to increase a rotational speed of a blade hub to a rotational speed suitable for the operation of the wind turbine generating system, and can also be widely used in other industrial equipment.

### BACKGROUND

A gear box is used in a conventional wind turbine generating system to convert low-speed and high-torque power of a main shaft into high-speed and low-torque power that is favorable for a generator to generate electricity.

A planetary gear train of a gear box of a conventional wind turbine generating system is configured as a simple planetary gear train, i.e., a planetary gear train including four parts of a sun gear, a planetary gear carrier, a planetary gear, and a gear ring. The torque on the planetary gear in the transmission process of the planetary gear train is large, resulting in the torque load capacity of the entire planetary gear train being limited and unable to meet the demand for high torque load capacity.

The torque load capacity can be improved by increasing the number of the planetary gear, which may lead to an increased volume of the gear box, which is not favorable to be applied in equipment which has a very limited arrangement space such as a wind turbine generating system. In order to arrange more planetary gears in the same volume of the gear box, it is required to reduce the size of gears, which in turn may lead to a reduced transmission speed ratio, and thus the requirement for a large transmission speed ratio of the wind turbine generating system is unable to be met.

Therefore, improving the torque load capacity simply by increasing the number of planetary gear is not ideal, since it cannot take into account the requirements of small size and large transmission speed ratio.

### SUMMARY

In order to solve the above technical problems, in an aspect, a gear box is provided according to the present application. The gear box includes a first planetary gear train. The first planetary gear train includes a first gear ring, a first planetary carrier, a first planetary gear, an idle sun gear and an idle planetary gear. The idle planetary gear and the first planetary gear are mounted on the first planetary carrier. The first planetary gear includes a pinion gear. The idle planetary gear and the pinion gear are both internally engaged with the first gear ring and externally engaged with the idle sun gear. The pinion gear is floatable in a radial direction thereof relative to the first planetary carrier.

In an embodiment of the gear box, the idle planetary gear is not allowed to float in a radial direction of the idle planetary gear relative to the first planetary carrier, or, the idle planetary gear is floatable in a radial direction of the idle planetary gear relative to the first planetary carrier and a maximum radial floating amount of the idle planetary gear is less than a maximum radial floating amount of the first planetary gear.

In an embodiment of the gear box, the first planetary gear train further includes a first sun gear. The first planetary gear further includes a bull gear and a connecting shaft. The bull gear has a diameter greater than a diameter of the pinion gear. The bull gear and the pinion gear are staggered from each other in an axial direction and are coaxially connected with each other through the connecting shaft.

In an embodiment of the gear box, the bull gear is externally engaged with the first sun gear, multiple first planetary gears are provided, the bull gears of at least two of the multiple first planetary gears are staggered from each other in the axial direction, and projections of the bull gears in a plane perpendicular to the axial direction are partially overlapped with each other.

In an embodiment of the gear box, a first bearing is provided between the first planetary gear and the first planetary carrier.

In an embodiment of the gear box, the first bearing is a self-aligning bearing, and the pinion gear is configured to float in the radial direction thereof relative to the first planetary carrier through the self-aligning bearing; and/or
the connecting shaft includes a first shaft section connected to the pinion gear, a second shaft section connected to the bull gear, the first shaft section and the second shaft section are connected with each other through a coupling being movable in a radial direction, so as to allow the pinion gear to float in a radial direction thereof relative to the first planetary carrier; and/or
the connecting shaft is configured as a flexible shaft being deformable in a radial direction, so as to allow the pinion gear to float in a radial direction thereof relative to the first planetary carrier.

In an embodiment of the gear box, the first bearing is provided at an end towards the bull gear.

In an embodiment of the gear box, the first planetary carrier includes a base and a bottom plate connected to one end of the base, the base has a base plate, a first accommodation space for accommodating the bull gear is formed between the base plate and the bottom plate, the base plate and the bottom plate each is provided with a bearing housing bore for mounting the first bearing, multiple first planetary gears are provided, some of the multiple first planetary gears are supported on the base plate by the first bearing, and others of the multiple first planetary gears are supported on the bottom plate by the first bearing.

In an embodiment of the gear box, the base further includes an end cover connected to the other end of the base, the end cover has an end cover plate, a second accommodation space for accommodating the idle planetary gear and the pinion gear is formed between the end cover plate and the base plate, the idle planetary gear is mounted outside an idle planetary gear shaft and a second bearing is provided between the idle planetary gear and the idle planetary gear shaft, the idle planetary gear shaft is connected to the end cover plate at one end and to the base plate at the other end, one end of the connecting shaft of the first planetary gear is extended into the second accommodation space, and the pinion gear is mounted outside the one end of the connecting shaft.

In an embodiment of the gear box, the end cover further has an input shaft, one end of the input shaft is connected to the end cover plate, and the other end of the input shaft extends axially towards a direction away from the end cover plate.

In an embodiment of the gear box, a ratio P is equal to a torque of the idle planetary gear divided by a torque of the first planetary gear. The ratio P is in a range of 1 < P < K. K represents a ratio of a radius of a pitch circle of the bull gear to a radius of a pitch circle of the pinion gear.

In an embodiment of the gear box, the number of the idle planetary gear is the same as the number of the first planetary gear, and the idle planetary gear and the first planetary gear are arranged alternately at equal angular spacing along a circumferential direction of the first gear ring.

In an embodiment of the gear box, the gear box further includes a one-stage or multi-stage second planetary gear train, the second planetary gear train includes a second gear ring, a second planetary carrier, a second planetary gear, and a second sun gear, the second planetary gear is mounted at the second planetary carrier, the second planetary gear is internally engaged with the second gear ring and externally engaged with the second sun gear; and the second planetary carrier is in transmission connection with the first sun gear or to the second sun gear of a previous stage.

In an embodiment of the gear box, the second planetary carrier includes two mounting plates spaced apart in an axial direction, an accommodation space for accommodating the second planetary gear is formed between the two mounting plates, the second planetary gear is mounted outside a second planetary gear shaft, a third bearing is provided between the second planetary gear and the second planetary gear shaft, and two ends of the second planetary gear shaft are respectively connected to the two mounting plates.

In an embodiment of the gear box, the second planetary carrier includes a connecting sleeve, one end of the connecting sleeve is connected to one of the two mounting plates and the other end of the connecting sleeve extends axially in a direction proximate to the first sun gear or to the second sun gear of the previous stage, and the first sun gear or the second sun gear of the previous stage is connected to the connecting sleeve.

In an embodiment of the gear box, the gear box includes a housing, the first gear ring and the second gear ring are both fixed to the housing, the first planetary carrier and the second planetary carrier are both at least partially mounted inside the housing, the first planetary carrier is supported in the housing by a fourth bearing, and the second planetary carrier is supported in the housing by a fifth bearing.

In an embodiment of the gear box, a torque arm for balancing is provided at an outer periphery of the housing, and the housing is further provided with a flange joint plate, through which the housing is connected and fixed to an external apparatus.

The embodiments of the gear box described above may be combined in any combination without conflict.

In another aspect, a transmission mechanism is provided according to the present application. The transmission mechanism includes the gear box according to any one of the embodiments.

In yet another aspect, a wind turbine generating system is further provided according to the present application. The wind turbine generating system includes a blade hub and a transmission mechanism, and the transmission mechanism is configured as the above transmission mechanism.

The idle planetary gear and the pinion gear of the gear box according to the present application can share the torque together, and the idle planetary gear shares more torque than the torque shared by the pinion gear (that is, the ratio P of the torque shared by the idle planetary gear to the torque shared by the pinion gear is greater than 1), so that the torque load of the pinion gear can be reduced, thereby increasing the torque load capacity of the entire first planetary gear train.

Furthermore, since the torque load of the pinion gear can be reduced, the load carrying requirement can be satisfied even by using a smaller-sized pinion gear. Therefore, a greater number of pinion gears can be arranged under the same size conditions, and thus the torque load capacity of the entire first planetary gear train can be further improved by increasing the number of the pinion gears while taking into account the small size, thereby realizing a relatively high torque load density.

In one of the above embodiments of the gear box, the bull gears of the at least two first planetary gears are staggered from each other in the axial direction, and projections of the bull gears in a plane perpendicular to the axial direction are partially overlapped with each other, so that the small size and the large transmission speed ratio can be taken into account for the gear box.

The transmission mechanism and the wind turbine generating system according to the present application also have the above-described technical effects due to inclusion of the above gear box.

### BRIEF DESCRIPTION OF THE DRAWINGS

FIG. 1 shows a disassembled schematic view of a first planetary gear train of a gear box according to an embodiment of the present application;
FIG. 2 shows a sectional view of a first planetary carrier in FIG. 1;
FIG. 3 shows a cross-sectional view of a gear box according to an embodiment of the present application in an assembled state from one perspective, taken along a cross-sectional line A-A in FIG. 1;
FIG. 4 is a cross-sectional view of the gear box shown in FIG. 3 from another perspective, taken along a cross-sectional line B-B in FIG. 1;
FIG. 5 shows an overall view of the gear box shown in FIG. 3;
FIG. 6 shows a force analysis diagram in a case that a pinion gear portion is floated sufficiently;
FIG. 7 shows a disassembled schematic view of a second planetary gear train of a gear box according to an embodiment of the present application; and
FIGS. 8 and 9 show a simplified diagram of a transmission path of a gear box according to an embodiment of the present application.

Reference numerals are listed as follows:
100 first planetary gear train;
101 first gear ring;
102 first planetary carrier, 1021 base, 1021a base plate, 1021b support ring, 1021c support arm, 1022 bottom plate, 1023 end cover, 1023a end cover plate, 1023b input shaft, A bearing connection portion, B bearing housing bore;
103 first planetary gear, 103a pinion gear, 103b bull gear, 103c connecting shaft;
104 idle sun gear; 105 idle planetary gear; 106 first sun gear; 107 first bearing; 108 idle planetary gear shaft; 109 second bearing;
200 second planetary gear train;
201 second gear ring;
202 second planetary carrier, 202a mounting plate, 202b connecting arm, 202c connecting sleeve;
203 second planetary gear; 204 second planetary gear shaft; 205 third bearing;
206 second sun gear;
207 output shaft;
300 housing, 300a torque arm, 300b flange joint plate;
400 fourth bearing;
500 fifth bearing.

### DETAILED DESCRIPTION OF THE EMBODIMENTS

In order to enable those skilled in the art to better understand the technical solutions of the present application, the technical solutions of the present application are described in further detail below in connection with the accompanying drawings and specific embodiments.

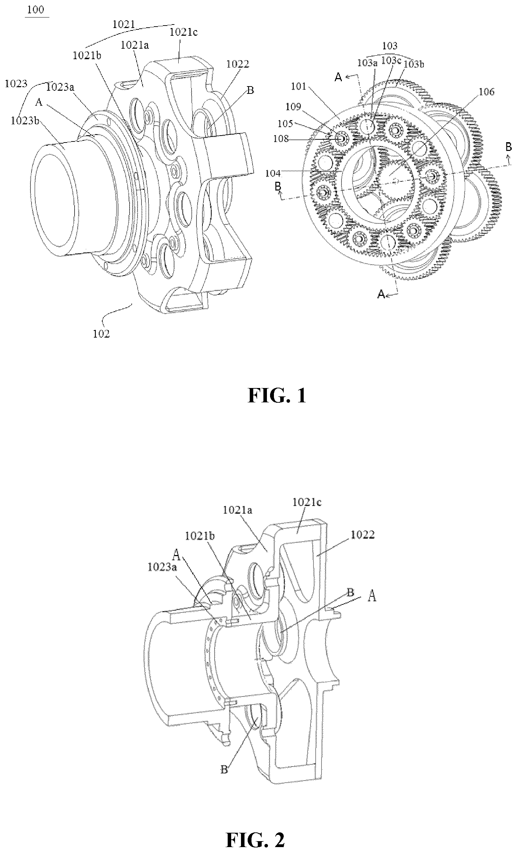

As shown in FIG. 1, a gear box includes a first planetary gear train 100.

The first planetary gear train 100 includes a first gear ring 101, a first planetary carrier 102, a first planetary gear 103, an idle sun gear 104, and an idle planetary gear 105.

The first planetary gear 103 includes a pinion gear 103a, and the pinion gear 103a is mounted between the first gear ring 101 and the idle sun gear 104. The pinion gear 103a is internally engaged with the first gear ring 101 and externally engaged with the idle sun gear 104.

The idle planetary gear 105 is also mounted between the first gear ring 101 and the idle sun gear 104. The idle planetary gear 105 is internally engaged with the first gear ring 101 and externally engaged with the idle sun gear 104. The idle planetary gear 105 directly transfers the torque with only the first gear ring 101 and the idle sun gear 104. The idle sun gear 104 directly transfers the torque with only the idle planetary gear 105 and the pinion gear 103a.

Both the first planetary gear 103 and the idle planetary gear 105 are supportively mounted to the first planetary carrier 102. When being mounted, the pinion gear 103a of the first planetary gear 103 is floatable in a radial direction thereof (a radial direction of the pinion gear 103a) relative to the first planetary carrier 102. The idle planetary gear 105 is not allowed to float in a radial direction thereof (a radial direction of the idle planetary gear 105) relative to the first planetary carrier 102, or, the idle planetary gear 105 is floatable in its own radial direction relative to the first planetary carrier 102 and a maximum radial floating amount of the idle planetary gear 105 is less than a maximum radial floating amount of the first planetary gear 103.

With the above floating design, when the first planetary carrier 102 rotates axially under the action of an input torque (at which time the first gear ring 101 is fixed), at least part of the torque is transferred to the idle planetary gear 105 first, and then is transferred from the idle planetary gear 105 to the pinion gear 103a of the first planetary gear 103 via the idle sun gear 104, so that the idle planetary gear 105 and the pinion gear 103a share the torque together, and the torque shared by the idle planetary gear 105 is more than the torque shared by the pinion gear 103a (that is, a ratio P of the torque shared by the idle planetary gear 105 to the torque shared by the pinion gear 103a is greater than 1), and thus the torque load of the pinion gear 103a can be reduced, thereby increasing the torque load capacity of the entire first planetary gear train 100.

Furthermore, since the torque load of the pinion gear 103a can be reduced, the load carrying requirement can be satisfied even by using a smaller-sized pinion gear 103a. Therefore, a larger number of pinion gears 103a can be arranged under the same size conditions, and thus the torque load capacity of the entire first planetary gear train 100 can be further improved by increasing the number of the pinion gear 103a while taking into account the small size, thereby realizing a higher torque load density.

Further, the first planetary gear train 100 further includes a first sun gear 106, and the first planetary gear 103 further includes a bull gear 103b and a connecting shaft 103c. The bull gear 103b has a diameter greater than a diameter of the pinion gear 103a, and the bull gear 103b and the pinion gear 103a are staggered from each other in an axial direction and are coaxially connected with each other in a transmission manner through the connecting shaft 103c.

The bull gear 103b of the first planetary gear 103 is externally engaged with the first sun gear 106, so that torque can be further transmitted to the first sun gear 106 for performing torque output by the first sun gear 106. Since the diameter of the bull gear 103b is greater than the diameter of the pinion gear 103a, performing the torque output by the bull gear 103b being engaged with the first sun gear 106 can enable the first planetary gear train 100 to obtain a relatively large transmission speed ratio.

In a case that multiple first planetary gears 103 are provided (two or more), the bull gears 103b of at least two of the first planetary gears 103 are staggered from each other in an axial direction and projections of the bull gears 103b in a plane perpendicular to the axial direction are partially overlapped with each other. In this way, the size of the bull gears 103b can be set to be larger under the same size condition, thereby facilitating the first planetary gear train 100 obtaining a larger transmission speed ratio.

In an embodiment, the bull gears 103b of the two first planetary gears 103 may be staggered from each other in the axial direction by setting the connecting shafts 103c of the two first planetary gears 103 at different lengths.

With the floating design and the bull gears 103b of the at least two first planetary gears 103 being staggered from each other in the axial direction and projections of the bull gears 103b in the plane perpendicular to the axial direction being partially overlapped with each other, the first planetary gear train 100 has a high torque load capacity, a large transmission speed ratio, and a small size, which solves the problem that the conventional gear box is not able to take into account all the three aspects.

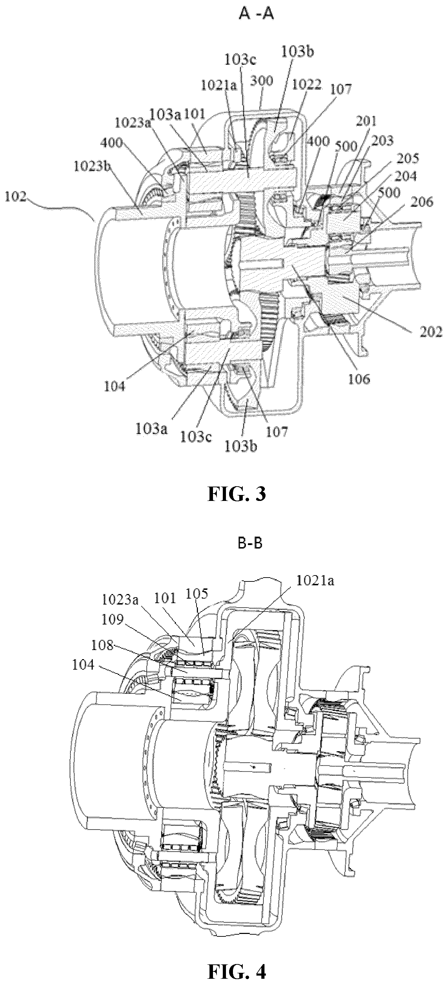

In an embodiment, as shown in FIG. 4, a first bearing 107 is provided between the first planetary gear 103 and the first planetary carrier 102, so that the first planetary gear 103 can rotate about its own axis relative to the first planetary carrier 102 when the first planetary carrier 102 rotates.

Specifically, the pinion gear 103a of the first planetary gear 103 can float in its own radial direction relative to the first planetary carrier 102 in various ways.

For example, in one way, the first bearing 107 is a self-aligning bearing, the pinion gear 103a floats in the radial direction through a self-aligning angle of the self-aligning bearing, and the magnitude of the maximum radial floating amount is related to the magnitude of the self-aligning angle.

In this embodiment, it is preferred that the self-aligning bearing is provided at an end towards the bull gear 103b or away from the pinion gear 103a, so as to guarantee that the pinion gear 103a is always well engaged with the idle sun gear 104 and the first gear ring 101 during the floating process.

As a further example, the connecting shaft 103c is provided in sections, the connecting shaft 103c includes a first shaft section connected to the pinion gear 103a, a second shaft section connected to the bull gear 103b, and the first shaft section and the second shaft section are connected with each other through a coupling being movable in a radial direction.

As a further example, the connecting shaft 103c is configured as a flexible shaft being deformable in a radial direction.

As a further example, a combination of any two or more of the above ways may also be used.

Specifically, the magnitude of the maximum radial floating amount of the pinion gear 103a is related to the magnitude of the ratio P of the torque shared by the idle planetary gear 105 to the torque shared by the pinion gear 103a.

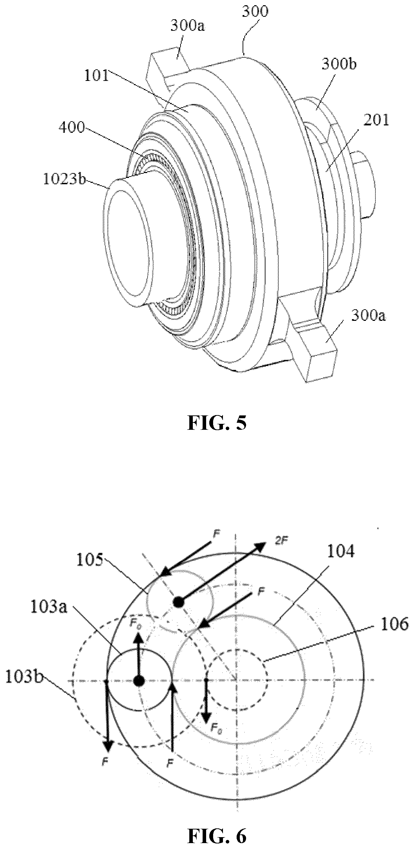

In a case of a sufficient large maximum radial floating amount of the pinion gear 103a, all of the torque is first transferred to the idle planetary gear 105, and then transferred from the idle planetary gear 105 to the pinion gear 103a of the first planetary gear 103 via the idle sun gear 104. In this case, as shown in FIG. 5, the force 2F on the idle planetary gear 105 is equal to the force F0×K of the pinion gear 103a, and K represents a radius of a pitch circle of the bull gear 103b divided by a radius of a pitch circle of the pinion gear 103a. That is, in a case of the sufficient large maximum radial floating amount of the pinion gear 103a, the ratio P of the torque shared by the idle planetary gear 105 to the torque shared by the pinion gear 103a is equal to K.

Of course, the magnitude of the maximum radial floating amount of the pinion gear 103a may be set flexibly according to the actual needs, as long as the ratio P of the torque shared by the idle planetary gear 105 to the torque shared by the pinion gear 103a is guaranteed to satisfy: 1 < P ≤ K.

Specifically, as in FIG. 1, the number of the idle planetary gear 105 may be set to be the same as the number of first planetary gear 103, and the idle planetary gear 105 and the first planetary gear 103 may be arranged alternately at equal angular spacing along a circumferential direction of the first gear ring 101. In this way, the overall force of the first planetary gear train 100 is more balanced, the transmission is smoother, and the service life is longer.

In an embodiment, as shown in FIGS. 1 and 2, the first planetary carrier 102 includes a base 1021 and a bottom plate 1022. The base 1021 has a base plate 1021a and a support arm 1021c. The support arm 1021c is connected to the base plate 1021a at one end, and is connected to the bottom plate 1022 at the other end.

A first accommodation space for accommodating the bull gear 103b is formed between the base plate 1021a and the bottom plate 1022. The base plate 1021a and the bottom plate 1022 each is provided with a bearing housing bore B for mounting the first bearing 107.

As shown in FIG. 3, the first planetary gear 103 with the relatively long connecting shaft 103c is supportively connected to the base plate 1021a by the first bearing 107. The first planetary gear 103 with the relatively short connecting shaft 103c is supportively connected to the bottom plate 1022 by the first bearing 107. In this way, the mounting requirement that the bull gears 103b of the at least two first planetary gears 103 are staggered from each other in the axial direction and the requirement that the first bearing 107 is mounted towards the bull gear 103b can be satisfied.

In an embodiment, as shown in FIGS. 1 and 2, the first planetary carrier 102 further includes an end cover 1023. The end cover 1023 has an end cover plate 1023a. The base 1021 further includes a support ring 1021b. The support ring 1021b is connected to the base plate 1021a at one end, and connected to the end cover plate 1023a by a fastener at the other end. A second accommodation space for accommodating the idle planetary gear 105 and the pinion gear 103a is formed between the end cover plate 1023a and the base plate 1021a.

As shown in FIG. 3, one end of the connecting shaft 103c of the first idle planetary gear 103 is extended into the second accommodation space, and the pinion gear 103a is mounted outside the one end of the connecting shaft 103c. In this way, the mounting requirements for the idle planetary gear 105 and the pinion gear 103a can be satisfied.

As shown in FIG. 4, the idle planetary gear 105 is mounted outside an idle planetary gear shaft 108, and a second bearing 109 is provided between the idle planetary gear 105 and the idle planetary gear shaft 108. The idle planetary gear shaft 108 is connected to the end cover plate 1023a at one end and is connected to the base plate 1021a at the other end.

In an embodiment, as shown in FIGS. 1 and 2, the first planetary carrier 102 is further provided with a bearing connection portion A. In the illustrated embodiment, one end where the end cover 1023 is located and another end where the bottom plate 1022 is located of the first planetary carrier 102 each is provided with one bearing connection portion A.

As shown in FIG. 3, the first planetary carrier 102 is at least partially mounted inside the housing 300, and the two bearing connection portions A at the two ends of the first planetary carrier 102 each is provided with one fourth bearing 400 outside the two bearing connection portions A, and are supported on a bearing mounting surface of the housing 300 by the fourth bearing 400.

In an embodiment, as shown in FIG. 3, the end cover 1023 of the first planetary carrier 102 further has an input shaft 1023b, one end of the input shaft 1023b is connected to the end cover plate 1023a, and the other end of the input shaft 1023b extends axially in a direction away from the end cover plate 1023a and out of a port at one end of the housing 300, so as to be externally connected to a drive apparatus for torque introduction.

The first planetary carrier 102 with the above structure can satisfy the requirement for assembly with the first planetary gear 103, the idle planetary gear 105, and the housing 300, and is small in size and highly integrated. Of course, the structure of the first planetary carrier 102 can be flexibly set according to the actual needs, and is not limited to the above structure, as long as it is a structure that can satisfy the requirement for assembly with the first planetary gear 103, the idle planetary gear 105, and the housing 300.

In an embodiment, as shown in FIG. 5, a torque arm 300a for balancing may be provided at an outer periphery of the housing 300, and the housing 300 may further be provided with a flange joint plate 300b, through which the housing is connected and fixed to an external apparatus.

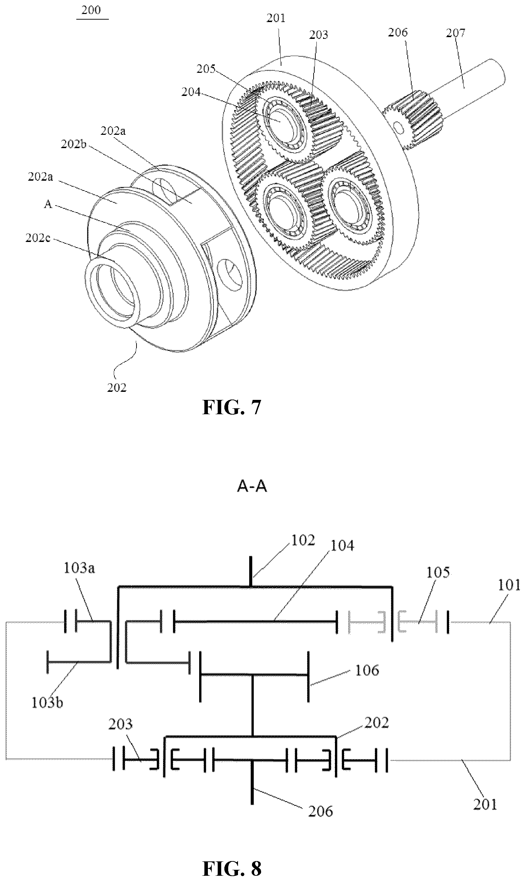

Further, as shown in FIG. 7, the gear box may further be provided with a second planetary gear train 200. The second planetary gear train 200 includes a second gear ring 201, a second planetary carrier 202, a second planetary gear 203, and a second sun gear 206.

A second planetary gear 203 is mounted to the second planetary carrier 202. The second planetary gear 203 is mounted between the second gear ring 201 and the second sun gear 206. The second planetary gear 203 is internally engaged with the second gear ring 201 and externally engaged with the second sun gear 206.

In an embodiment, only one-stage second planetary gear train 200 may be provided, or a multi-stage (two or more stages) second planetary gear train 200 may be provided. In a case of the multi-stage second planetary gear train 200, the stages of the second planetary gear train 200 are arranged sequentially along the axial direction, and the second planetary carrier 202 of a stage of the second planetary gear train 200 is in transmission connection with the second sun gear 206 of a previous stage of the second planetary gear train 200.

In an embodiment, as shown in FIG. 7, the second planetary carrier 202 includes two mounting plates 202a spaced apart along the axial direction and a connecting arm 202b configured to connect the two mounting plates 202a. An accommodation space for accommodating the second planetary gear 203 is formed between the two mounting plates 202a.

As shown in FIG. 3, the second planetary gear 203 is mounted outside the second planetary gear shaft 204. A third bearing 205 is provided between the second planetary gear 203 and the second planetary gear shaft 204. Two ends of the second planetary gear shaft 204 are respectively connected to the two mounting plates 202a. In this way, the mounting requirements for the second planetary gear 203 can be satisfied.

In an embodiment, as shown in FIG. 7, the second planetary carrier 202 may further include a connecting sleeve 202c. One end of the connecting sleeve 202c is connected to one of the two mounting plates 202a, and the other end of the connecting sleeve 202c extends axially in a direction towards the first sun gear 106 or the second sun gear 206 of the previous stage. The connecting sleeve 202c is configured to connect the first sun gear 106 or the second sun gear 206 of the previous stage. The second sun gear 206 of a last stage is connected to an output shaft 207, which transmits the torque to the external apparatus.

In an embodiment, as shown in FIG. 7, the second planetary carrier 202 is further provided with a bearing connection portion A. In the illustrated embodiment, one end where the connecting sleeve 202c is located and another end where the mounting plate 202a away from the connecting sleeve 202 is located of the second planetary carrier 202 each is provided with one bearing connection portion A (only one of the bear connection portions A is visible in FIG. 7). The second planetary carrier 202 is at least partially mounted inside the housing 300, and each of the two bearing connection portions A at two ends of the second planetary carrier 202 is provided with a fifth bearing 500, through which the second planetary carrier 202 is supported on a bearing mounting surface of the housing 300.

The second planetary carrier 202 with the above structure can satisfy the requirement for assembly with the second planetary gear 203 and the housing 300, and is small in size and highly integrated. Of course, the structure of the second planetary carrier 202 can be flexibly set according to the actual needs, and is not limited to the above structure, as long as it is a structure that can satisfy the requirement for assembly with the second planetary gear 203 and the housing 300.

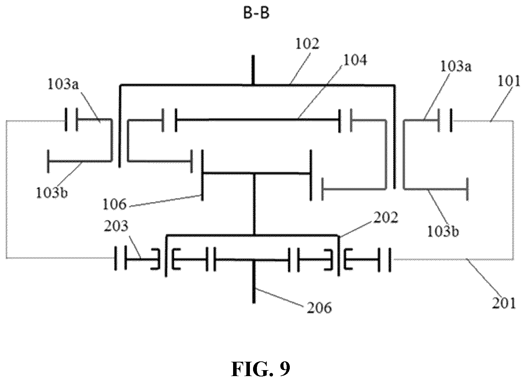

As shown in FIGS. 8 and 9, a transmission path of a gearbox in this embodiment is as follows.

An input torque is applied to the first planetary carrier 102 to drive the first planetary carrier 102 to rotate, and the torque is distributed by the first planetary carrier 102 to the idle planetary gear 105 and the pinion gear 103a of the first planetary gear 103 at the ratio P, so that the idle planetary gear 105 and the pinion gear 103a revolve along with the first planetary carrier 102 and further rotate about their own axes. In the process of distributing the torque, at least part of the torque is first transferred to the idle planetary gear 105, then is transferred from the idle planetary gear 105 to the idle sun gear 104, and then transferred from the idle sun gear 104 to the pinion gear 103a of the first planetary gear 103.

Each pinion gear 103a transfers the torque load applied thereto to a bull gear 103b connected thereto. Each bull gear 103b further transfers the torque to the first sun gear 106, and the bull gears 103b together drive the first sun gear 106 and the second planetary carrier 202 connected to the first sun gear 106 to rotate.

The second planetary carrier 202 transfers the torque to the second planetary gear 203. The torque is transferred to the second sun gear 206 and the output shaft 207 connected thereto by the second planetary carrier 203, and is transferred to the external apparatus by the output shaft 207.

In summary, the core idea of the present application is to reduce the torque load borne by the first planetary gear 103 by allowing the maximum radial floating amount of the pinion gear 103a of the first planetary gear 103 to be greater than the maximum radial floating amount of the idle planetary gear 105 (if the pinion gear 103a does not float, the maximum radial floating amount is zero) to utilize the idle planetary gear 105 to share the torque, which can take into account a small size and a high torque load capacity, and achieve a high torque load density. The bull gears 103b of the at least two first planetary gears 103 are staggered from each other in the axial direction, and projections of the bull gears 103b in a plane perpendicular to the axial direction are partially overlapped with each other, so that the small size and the large transmission speed ratio are taken into account.

The principles and embodiments of the present application are clarified from specific embodiments herein, and the above description of the embodiments is only intended to facilitate understanding the method and the key concept of the present application. It should be noted that several improvements and modifications can be made to the present application by those skilled in the art without departing from the principles of the present application. These improvements and modifications shall fall within the scope of the claims of the present application.

## Claims

1. A gear box, wherein the gear box comprises a first planetary gear train (100), the first planetary gear train (100) comprises a first gear ring (101), a first planetary carrier (102), a first planetary gear (103), an idle sun gear (104) and an idle planetary gear (105), wherein
the idle planetary gear (105) and the first planetary gear (103) are mounted on the first planetary carrier (102), the first planetary gear (103) comprises a pinion gear (103a), the idle planetary gear (105) and the pinion gear (103a) are both internally engaged with the first gear ring (101) and externally engaged with the idle sun gear (104), and the pinion gear (103a) is floatable in a radial direction of the pinion gear (103a) relative to the first planetary carrier (102).

2. The gear box according to claim 1, wherein the idle planetary gear (105) is not allowed to float in a radial direction of the idle planetary gear (105) relative to the first planetary carrier (102), or, the idle planetary gear (105) is floatable in a radial direction of the idle planetary gear (105) relative to the first planetary carrier (102) and a maximum radial floating amount of the idle planetary gear (105) is less than a maximum radial floating amount of the first planetary gear (103).

3. The gear box according to claim 2, wherein the first planetary gear train (100) further comprises a first sun gear (106), the first planetary gear (103) further comprises a bull gear (103b) and a connecting shaft (103c), the bull gear (103b) has a diameter greater than a diameter of the pinion gear (103a), the bull gear (103b) and the pinion gear (103a) are staggered from each other in an axial direction and are coaxially connected with each other through the connecting shaft (103c).

4. The gear box according to claim 3, wherein the bull gear (103b) is externally engaged with the first sun gear (106), a plurality of first planetary gears (103) are provided, wherein the bull gears (103b) of at least two of the plurality of first planetary gears (103) are staggered from each other in the axial direction, and projections of the bull gears (103b) in a plane perpendicular to the axial direction are partially overlapped with each other.

5. The gear box according to claim 3, wherein a first bearing (107) is provided between the first planetary gear (103) and the first planetary carrier (102).

6. The gear box according to claim 5, wherein the first bearing (107) is a self-aligning bearing, and the pinion gear (103a) is configured to float in the radial direction of the pinion gear (103a) through the self-aligning bearing; and/or
the connecting shaft (103c) comprises a first shaft section connected to the pinion gear (103a), a second shaft section connected to the bull gear (103b), wherein the first shaft section and the second shaft section are connected with each other through a coupling being movable in a radial direction, to allow the pinion gear (103a) to float in the radial direction of the pinion gear (103a); and/or
the connecting shaft (103c) is configured as a flexible shaft being deformable in a radial direction, to allow the pinion gear (103a) to float in a radial direction thereof

7. The gear box according to claim 5, wherein the first bearing (107) is provided at an end towards the bull gear (103b).

8. The gear box according to any one of claims 5 to 7, wherein the first planetary carrier (102) comprises a base (1021) and a bottom plate (1022) connected to one end of the base (1021), the base (1021) has a base plate (1021a), a first accommodation space for accommodating the bull gear (103b) is formed between the base plate (1021a) and the bottom plate (1022), the base plate (1021a) and the bottom plate (1022) each is provided with a bearing housing bore (B) for mounting the first bearing (107), a plurality of first planetary gears (103) are provided, some of the plurality of first planetary gears (103) are supported on the base plate (1021a) by the first bearing (107), and others of the plurality of first planetary gears (103) are supported on the bottom plate (1022) by the first bearing (107).

9. The gear box according to claim 8, wherein the base (1021) further comprises an end cover (1023) connected to the other end of the base (1021), the end cover (1023) has an end cover plate (1023a), a second accommodation space for accommodating the idle planetary gear (105) and the pinion gear (103a) is formed between the end cover plate (1023a) and the base plate (1021a), the idle planetary gear (105) is mounted outside an idle planetary gear shaft (108) and a second bearing (109) is provided between the idle planetary gear (105) and the idle planetary gear shaft (108), the idle planetary gear shaft (108) is connected to the end cover plate (1023a) at one end and to the base plate (1021a) at the other end, one end of the connecting shaft (103c) of the first planetary gear (103) is extended into the second accommodation space, and the pinion gear (103a) is mounted outside the one end of the connecting shaft (103c).

10. The gear box according to claim 9, wherein the end cover (1023) further has an input shaft (1023b), one end of the input shaft (1023b) is connected to the end cover plate (1023a), and the other end of the input shaft (1023b) extends axially towards a direction away from the end cover plate (1023a).

11. The gear box according to any one of claims 3 to 7, wherein a torque of the idle planetary gear (105) divided by a torque of the first planetary gear (103) is equal to a ratio P in a range of 1 < P ≤ K, wherein K represents a radio of a radius of a pitch circle of the bull gear (103b) to a radius of a pitch circle of the pinion gear (103a).

12. The gear box according to any one of claims 4 to 7, wherein the number of the idle planetary gear (105) is the same as the number of the first planetary gear (103), and the idle planetary gear (105) and the first planetary gear (103) are arranged alternately at equal angular spacing along a circumferential direction of the first gear ring (101).

13. The gear box according to any one of claims 3 to 7, wherein the gear box further comprises a one-stage or multi-stage second planetary gear train (200), the second planetary gear train (200) comprises a second gear ring (201), a second planetary carrier (202), a second planetary gear (203), and a second sun gear (206), wherein the second planetary gear (203) is mounted at the second planetary carrier (202), the second planetary gear (203) is internally engaged with the second gear ring (201) and externally engaged with the second sun gear (206); and the second planetary carrier (202) is in transmission connection with the first sun gear (106) or to the second sun gear (206) of a previous stage.

14. The gear box according to claim 13, wherein the second planetary carrier (202) comprises two mounting plates (202a) spaced apart in an axial direction, an accommodation space for accommodating the second planetary gear (203) is formed between the two mounting plates (202a), the second planetary gear (203) is mounted outside a second planetary gear shaft (204), a third bearing (205) is provided between the second planetary gear (203) and the second planetary gear shaft (204), and two ends of the second planetary gear shaft (204) are respectively connected to the two mounting plates (202a).

15. The gear box according to claim 14, wherein the second planetary carrier (202) comprises a connecting sleeve (202c), one end of the connecting sleeve (202c) is connected to one of the two mounting plates (202a) and the other end of the connecting sleeve (202c) extends axially in a direction proximate to the first sun gear (106) or to the second sun gear (206) of the previous stage, and the first sun gear (106) or the second sun gear (206) of the previous stage is connected to the connecting sleeve (202c).

16. The gear box according to claim 15, wherein the gear box comprises a housing (300), the first gear ring (101) and the second gear ring (201) are both fixed to the housing (300), the first planetary carrier (102) and the second planetary carrier (202) are both at least partially mounted inside the housing (300), the first planetary carrier (102) is supported in the housing (300) by a fourth bearing (400), and the second planetary carrier (202) is supported in the housing (300) by a fifth bearing (500).

17. The gear box according to claim 16, wherein a torque arm (300a) for balancing is provided at an outer periphery of the housing (300), and the housing (300) is further provided with a flange joint plate (300b), through which the housing (300) is connected and fixed to an external apparatus.

18. A transmission mechanism, comprising the gear box according to any one of claims 1 to 17.

19. A wind turbine generating system, comprising a blade hub and a transmission mechanism, wherein the transmission mechanism is configured as the transmission mechanism according to claim 18, and the gear box of the transmission mechanism is connected to the blade hub to increase a speed of the blade hub to a target rotational speed.
